# EUROPÄISCHE PATENTANMELDUNG

(11) **EP 2 930 487 A1**
(43) Veröffentlichungstag der Anmeldung: **14.10.2015**
(21) Anmeldenummer: 14001299.8
(22) Anmeldetag: 09.04.2014
(51) Int. Cl.: G01L 5/00, G01G 13/28, G01G 19/42, G01G 13/295

(54) **Sensormodul**

(71) Anmelder: Identytec GmbH & Co. KG, 30880 Hannover/Laatzen (DE)
(72) Erfinder: Finke, Thorsten, 31191 Algermissen (DE)
(74) Vertreter: Wagner, Carsten

(57) **Zusammenfassung**

Ein Sensormodul 2 zur Verwendung in einem System zur Überwachung und/oder Steuerung des Bestandes an Bauteilen in einer Serienfertigung weist wenigstens einen Kraftsensor zum Abfühlen des Vorhandenseins und/oder der Gewichtskraft eines Ladungsträgers auf. Der Kraftsensor steht in Datenübertragungsverbindung mit einem Funksender 16 zur Übermittlung eines die abgefühlte Gewichtskraft des Ladungsträgers repräsentierenden Signales zu einer zentralen Steuerungseinrichtung 20.

## Beschreibung

Die Erfindung betrifft ein Sensormodul zur Verwendung in einem System zur Überwachung und/oder Steuerung des Bestandes an Bauteilen in eine Serienfertigung.

Beispielsweise in der Serienfertigung von Automobilen ist es für einen reibungslosen Fertigungsablauf erforderlich, an verschiedenen Stellen des Fertigungsprozesses die jeweils benötigten Bauteile bereitzuhalten. Hierbei kann eine Vielzahl gleichartiger Bauteile jeweils in oder an einem Ladungsträger, beispielsweise einem Kleinladungsträger oder anderem Materialbehälter, aufgenommen sein, wobei eine Mehrzahl solcher Ladungsträger in einen Zuführkanal hintereinander angeordnet ist. Der Zuführkanal kann beispielsweise durch eine geeignete Rollenbahn gebildet sein. Während des Fertigungsprozesses werden zunächst die Bauteile aus einem in Ablaufrichtung vorderen Ladungsträger entnommen. Wenn dieser Materialbehälter vollständig geleert ist, kann er aus dem Zuführkanal entfernt werden, so dass der dahinter angeordnete Ladungsträger nachrutscht.

Um ständig eine ausreichende Anzahl von Bauteilen bereitzuhalten, ist es erforderlich, für jeden aus der Ablaufbahn entnommenen leeren Ladungsträger einen befüllten Ladungsträger einzusetzen. Hierzu kann ein Werker, der das letzte Bauteil aus einem Ladungsträger entnommen und ggf. den Ladungsträger aus dem Zuführkanal entfernt hat, mittels einer hierfür vorgesehenen Vorrichtung manuell einen befüllten Ladungsträger anfordern. Nach Anforderung eines entsprechenden Ladungsträgers wird dieser zu dem Regal transportiert und an dem in Ablaufrichtung hinteren Ende in den Zuführkanal eingesetzt. Eine hierzu verwendete Vorrichtung ist beispielsweise WO 2004/073329 A2 bekannt.

Um die Steuerung des Bestandes der benötigten Bauteile zu vereinfachen, ist es aus der DE 20 2007 012 296 U1 bekannt, die Anforderung benötigter Bauteile zu automatisieren, so dass ein manueller Abruf durch einen Werker nicht mehr erforderich ist. Aus der DE 20 2007 012 296 U1 ist hierzu ein Sensormodul zur Verwendung in einem System zur Überwachung und/oder Steuerung des Bestandes an einer Mehrzahl von Bauteilen in einer Serienfertigung bekannt, das einen Sensor zur Überwachung eines Bestandes an Bauteilen und einen Funksender zur Herstellung einer Datenübertragungsverbindung mit einer zentralen Steuerungseinrichtung aufweist. Mittels des Sensors wird abgefühlt, ob sich beispielsweise in einem Zuführkanal zur Zuführung eines bestimmten Bauteiles noch eine ausreichende Anzahl von Materialbehältern und damit von Bauteilen befindet. Wird mittels des Sensors festgestellt, dass sich in dem Zuführkanal nicht mehr eine ausreichende Menge von Materialbehältern und damit an Bauteilen befindet, so wird mittels des Funksenders ein Signal zu einer Empfangseinheit gesendet, die beispielsweise Teil einer zentralen Steuerungseinrichtung eines Systems zur Überwachung und/oder Steuerung des Bestandes an einer Mehrzahl von Bauteilen sein kann. Durch die zentrale Steuerungseinrichtung kann dann die Nachlieferung bzw. die Nachbestellung der benötigten Bauteile gesteuert werden.

Der Erfindung liegt die Aufgabe zugrunde, ein Sensormodul bereitzustellen, mittels dessen die Überwachung und/oder Steuerung des Bestandes an Bauteilen in einer Serienfertigung einfach und kostengünstig gestaltet ist.

Diese Aufgabe wird durch die im Anspruch 1 angegebene Erfindung gelöst.

Die Erfindung sieht wenigstens einen Kraftsensor zum Abfühlen des Vorhandenseins und/oder der Gewichtskraft eines Ladungsträgers vor. Erfindungsgemäß wird also festgestellt, ob ein Ladungsträger an einer bestimmten Stelle, beispielsweise in einem Regal, vorhanden ist, indem seine Gewichtskraft ermittelt wird. Da das Leergewicht des Ladungsträgers bekannt ist, kann auf diese Weise nicht nur festgestellt werden, ob sich ein Ladungsträger an einer vorbestimmten Stelle befindet, sondern es kann auch festgestellt werden, in welchem Maße der Ladungsträger noch mit Bauteilen befüllt ist. Auf diese Weise kann der Nachschub an Bauteilen besonders präzise gesteuert werden, so dass stets eine ausreichende Versorgung mit Bauteilen sichergestellt werden kann.

Ein besonderer Vorteil des erfindungsgemäßen Sensormodules besteht darin, dass es relativ einfach und kostengünstig im Aufbau ist. Geeignete Kraftsensoren stehen als relativ einfache und kostengünstige Standardbauteile zur Verfügung. Entsprechend dem Gewicht eines Ladungsträgers bzw. der Differenz zwischen dem Gewicht eines vollständig befüllten Ladungsträgers und der Gewichtskraft des gleichen Ladungsträgers im Leerzustand kann die Empfindlichkeit des Kraftsensors inneerhalb weiter Grenzen gewählt werden.

Entsprechend dem jeweiligen Anwendungsfall können Kraftsensoren verwendet werden, die geeignet sind, eine Gewichtsdifferenz zwischen mit Bauteilen befülltem und leerem Ladungsträger von wenigen Gramm abzufühlen, um beispielsweise den Füllstand eines mit Schaumstoffteilen befüllten Kleinladungsträgers zu ermitteln. Erfindungsgemäß ist es jedoch auch möglich, absolute Gewichte bzw. Gewichtsdifferenzen im Bereich von mehreren 100 kg oder darüber zu ermitteln, um beispielsweise festzustellen, wie der Füllzustand einer mit schweren Bauteilen beladenen Europalette ist.

Eine außerordentlich vorteilhafte Weiterbildung der Erfindung sieht vor, dass das Sensormodul einschließlich Funksender batteriebetrieben ist. Auf diese Weise ist das erfindungsgemäße Sensormodul völlig unabhängig von netzgebundenen Spannungsquellen, so dass es ein beliebiger geeigneter Stelle in einer Serienfertigung eingesetzt werden kann, ohne dass dort ein Netzanschluss bereitgestellt werden muss. Dies ist in der Praxis ein wichtiger Vorteil, weil das Bereitstellen eines Netzanschlusses mit relativ hohen Kosten verbunden ist, die sich bei einer großen Anzahl eingesetzter Sensormodule dementsprechend vervielfachen würden. In Kombination mit einem Kraftaufnehmer ergibt sich dadurch eine besondere kombinatorische Wirkung, dass Kraftsensoren für eine zuverlässige Funktion nur sehr geringe Steuerungsströme benötigen, so dass der Stromverbrauch gering gehalten ist und gegenüber herkömmlichen Sensormodulen, die beispielsweise einen Laser oder eine Kamera verwenden, die Lebensdauer der Batterie damit wesentlich erhöht ist. Dies verringert den Wartungsaufwand und die Wartungskosten insbesondere dann, wenn eine große Anzahl von Sensormodulen verwendet wird.

Eine andere vorteilhafte Weiterbildung der Erfindung sieht vor, dass der Funksender derart ausgebildet und eingerichtet ist, dass in vorbestimmten zeitlichen Abständen eine Signalübertragung zu der zentralen Steuerungseinrichtung stattfindet. Bei dieser Ausführungsform sendet der Funksender regelmäßig ein Signal zu der zentralen Steuerungseinrichtung, wobei dieses Signal im einfachsten Falle repräsentieren kann, ob ein Ladungsträger an einer vorbestimmten Stelle vorhanden ist. Das Signal kann jedoch auch die Gewichtskraft des Ladungsträgers repräsentierende Daten enthalten, so dass anhand der übermittelten Gewichtskraft an der zentralen Steuerungseinrichtung festgestellt werden kann, in welchem Füllzustand sich der Ladungsträger befindet. Das übermittelte Signal kann auch beispielsweise dazu dienen, dass das Sensormodul in vorbestimmten zeitlichen Abständen seine Funktionsfähigkeit meldet. Es ist auch möglich, mit dem Signal Daten zu übertragen, die den Ladezustand der Batterie repräsentieren, sofern das Sensormodul batteriebetrieben ist.

Eine andere Weiterbildung der Erfindung sieht vor, dass der Funksensor derart ausgebildet und eingerichtet ist, dass ein die Gewichtskraft des Ladungsträgers repräsentierendes Signal zu der zentralen Einrichtung übertragen wird, wenn die Gewichtskraft des Ladungsträgers einen vorbestimmten Wert erreicht oder unterschreitet. Auf diese Weise kann an der zentralen Steuerungseinrichtung festgestellt werden, in welchem Füllzustand sich ein bestimmter Ladungsträger befindet bzw. wann eine Nachlieferung von Bauteilen erforderlich ist. Auf diese Weise kann somit eine vollautomatische Anforderung von Bauteilen realisiert werden. Da anhand der übermittelten momentanen Gewichtskraft des Ladungsträger (im Vergleich zu der vorbekannten Gewichtskraft eines unbefüllten Ladungsträgers) präzise ermittelt werden kann, in welchem Füllzustand sich der Ladungsträger befindet, wieviele Bauteile er also noch enthält, ist eine besonders präzise Überwachung bzw. Steuerung des Bestandes an Bauteilen ermöglicht.

Der Kraftaufnehmer des erfindungsgemäßen Sensormodules kann entsprechend einem beliebigen geeigneten Sensorprinzip arbeiten. Eine außerordentlich vorteilhafte Weiterbildung der Erfindung sieht vor, dass wenigstens ein Kraftsensor als Wägezelle ausgebildet ist. Derartige Wägezellen stehen als relativ einfache und kostengünstige Standardbauteile zur Verfügung und ermöglichen eine präzise Kraft- bzw. Gewichtsmessung. Eine Wägezelle kann beispielsweise einen Federkörper enthalten, der sich unter der Einwirkung der Gewichtskraft eines Ladungsträger elastisch verformt. Diese elastische Verformung kann beispielsweise über Dehnungsmessstreifen erfasst und in ein elektrisches Signal umgewandelt werden.

Eine andere vorteilhafte Weiterbildung der Erfindung sieht vor, dass dem Kraftaufnehmer eine Überlastsicherung zugeordnet ist. Auf diese Weise ist verhindert, dass der Kraftaufnehmer beim Auftreten einer Überlast beschädigt wird, falls beispielsweise eine unerwartete hohe statische oder dynamische Belastung auftritt.

Bei der vorgenannten Ausführungsform ist die Überlastsicherung vorzugsweise als passive Überlastsicherung ausgebildet. Unter einer passiven Überlastsicherung wird im Sinne der Erfindung verstanden, dass die Überlastsicherung ohne Energieversorgung wirksam ist bzw. wird. Wird beispielsweise ein Kraftaufnehmer verwendet, der nach dem Prinzip eines unter der Gewichtskraft eines Ladungsträgers elastisch verformbaren Messkörpers arbeitet, so kann die elastische Verformung des Messkörpers beispielsweise durch einen mechanischen Anschlag begrenzt werden, der so eine passive Überlastsicherung bildet.

Die räumliche Anordnung des Kraftaufnehmers des erfindungsgemäßen Sensormodules relativ zu einem Ladungsträger ist innerhalb weiter Grenzen wählbar. Soll beispielsweise der Füllzustand einer Palette ermittelt werden, so kann der Kraftaufnehmer unterhalb eines Bauteiles angeordnet sein, auf dem die Palette aufsteht, so dass der über den Kraftaufnehmer die Gewichtskraft der Palette ermittelt werden kann. Eine insbesondere bei Verwendung von Kleinladungsträgern vorteilhafte Weiterbildung der Erfindung sieht vor, dass dem Sensormodul eine schiefe Ebene zugeordnet ist, die eine Ablaufbahn für Ladungsträger, insbesondere Kleinladungsträger, definiert, wobei der Kraftaufnehmer oder ein mit dem Kraftaufnehmer in Kraftübertragungsverbindung stehendes Bauteil in die Ablaufbahn hineinragt. Diese Ausführungsform trägt den praktischen Gegebenheiten an Regalen für den Materialnachschub an Bauteilen in Kleinladungsträgern Rechnung. Auf einer entsprechenden Ablaufbahn sind in der Praxis hintereinander mehrere Kleinladungsträger angeordnet. Sind aus einem Kleinladungsträger sämtliche Bauteile entnommen, so kann er aus der Ablaufbahn entfernt werden, so dass ein dahinter angeordneter Kleinladungsträger nachrutscht. Hierbei kann die Ablaufbahn beispielsweise durch eine Rollenbahn gebildet sein. Dadurch, dass der Kraftaufnehmer oder ein mit demselben in Kraftübertragungsverbindung stehendes Bauteil in die Ablaufbahn hineinragt, kann die Gewichtskraft eines in der Ablaufbahn angeordneten Ladungsträgers ermittelt werden. Gleichzeitig kann anhand des ermittelten Gewichtes festgestellt werden, ob und in welcher Anzahl sich hinter dem Ladungsträger, der sich in Kontakt mit dem Kraftaufnehmer befindet, noch weitere Ladungsträger befinden.

Ein erfindungsgemäßes System zur teil- oder vollautomatischen Steuerung des Nachschubs an Bauteilen in einer Serienfertigung ist im Anspruch 9 angegeben. Das System weist erfindungsgemäß wenigstens ein erfindungsgemäßes Sensormodul auf. Die Verwendung eines erfindungsgemäßen Sensormodules zum Abfühlen des Vorhandenseins und/oder der Gewichtskraft eines Ladungsträgers in einem System zur teil- oder vollautomatischen Steuerung des Nachschubs an Bauteilen in einer Serienfertigung ist im Anspruch 10 angegeben.

Die Erfindung wird nachfolgend anhand der beigefügten Zeichnung näher erläutert, in der stark schematisiert Ausführungsbeispiele eines erfindungsgemäßen Sensormodules dargestellt sind. Dabei bilden alle beschriebenen, in der Zeichnung dargestellten und in den Patentansprüchen beanspruchten Merkmale für sich genommen sowie in beliebiger geeigneter Kombination miteinander den Gegenstand der Erfindung, unabhängig von ihrer Zusammenfassung in den Patentansprüchen sowie deren Rückbeziehung sowie unabhängig von ihrer Beschreibung bzw. Darstellung in der Zeichnung.

Es zeigt:
- FIG. 1: in schematischer Perspektivansicht ein erstes Ausführungsbeispiel eines erfindungsgemäßen Sensormodules,
- FIG. 2: ein schematisches Blockschaltbild zur Verdeutlichung der Einbindung des Sensormodules gemäß FIG. 1 in ein System zur Überwachung und/oder Steuerung des Bestandes an Bauteilen in einer Serienfertigung und
- FIG. 3: in stark schematisierter Seitenansicht ein zweites Ausführungsbeispiel eines erfindungsgemäßen Sensormodules.

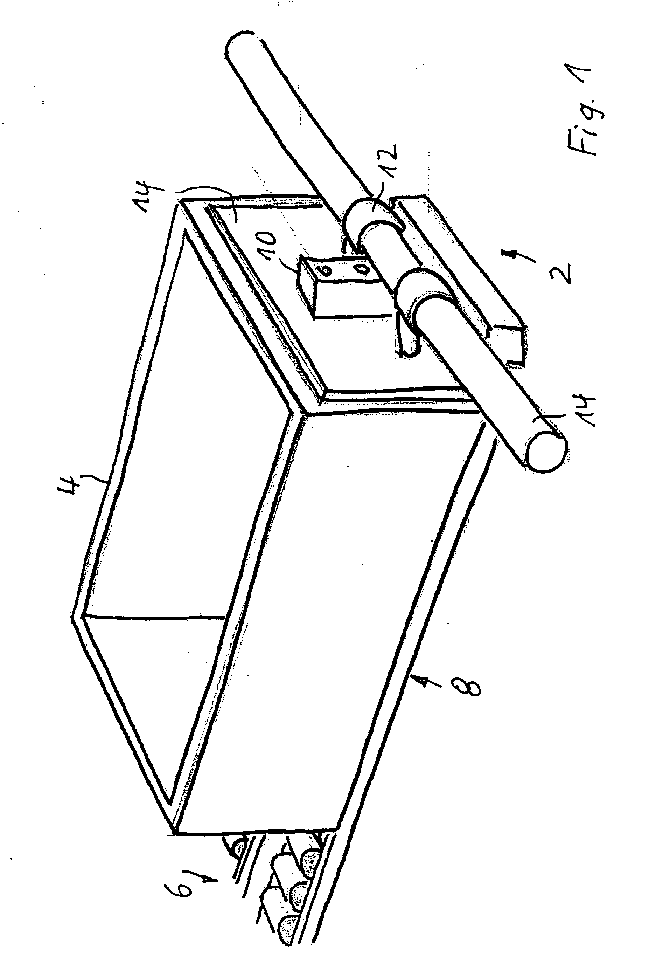

In FIG. 1 ist ein erstes Ausführungsbeispiel eines erfindungsgemäßen Sensormodules 2 zur Verwendung in einem System zur Überwachung und/oder Steuerung des Bestandes an Bauteilen in einer Serienfertigung dargestellt. Das Sensormodul weist erfindungsgemäß einen Kraftsensor zum Abfühlen des Vorhandenseins und/oder der Gewichtskraft eines Ladungsträgers auf, wobei es sich bei dem dargestellten Ausführungsbeispiel bei dem Ladungsträger um einen Kleinladungsträger 4 handelt, der zur Aufnahme von Kleinteilen dient.

Bei dem dargestellten Ausführungsbeispiel ist dem Sensormodul 2 eine schiefe Ebene zugeordnet, die eine als Rollenbahn 6 ausgebildete Ablaufbahn für den Kleinladungsträger 4 sowie gleichartige Kleinladungsträger definiert. Die Rollenbahn 6 ist in einem Regal 8 angeordnet, das in einer Serienfertigung an einer Stelle angeordnet ist, an der die in dem Kleinladungsträger aufgenommenen Bauteile benötigt werden.

Im Rahmen der Serienfertigung werden Bauteile aus dem Kleinladungsträger entnommen, bis dieser geleert ist und von einem Werker aus der Ablaufbahn 6 entfernt wird, so dass aufgrund der Ausbildung der Rollenbahn 6 als schiefe Ebene ein in Ablaufrichtung hinter dem Kleinladungsträger 4 angeordneter gleichartiger Kleinladungsträger (in der Zeichnung nicht dargestellt) nachrutscht. Wie auf diese Weise in einer Serienfertigung Bauteile bereitgestellt werden, ist dem Fachmann allgemein bekannt, beispielsweise durch DE 20 2007 012 269 U1, DE 10 2012 007 716 A1 und DE 10 2012 007 720 A1 und wird daher nicht weiter erläutert.

Bei dem dargestellten Auführungsbeispiel ist der Kraftsensor durch eine Wägezelle 10 gebildet, die über eine Halterung 12 an einer Querstrebe 14 des Regales 8 derart befestigt ist, dass die Wägezelle 10 (Kraftsensor) in die Ablaufbahn des Kleinladungsträgers 4 hineinragt. Bei dem dargestellten Ausführungsbeispiel ist eine Platte 14 vorgesehen, die mit der Wägezelle 10 in Kraftübertragungsverbindung steht und eine Anlagefläche für das in Ablaufrichtung vordere Ende des Kleinladungsträgers 4 bildet. Dadurch, dass die Ablaufbahn als schiefe Ebene ausgebildet ist, wird auf diese Weise die Gewichtskraft des Kleinladungsträgers 4 nebst darin aufgenommenen Bauteilen auf die Wägezelle übertragen, so dass die entsprechende Gewichtskraft von der Wägezelle ermittelt werden kann.

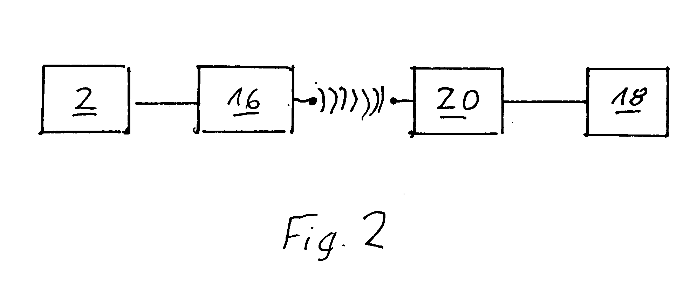

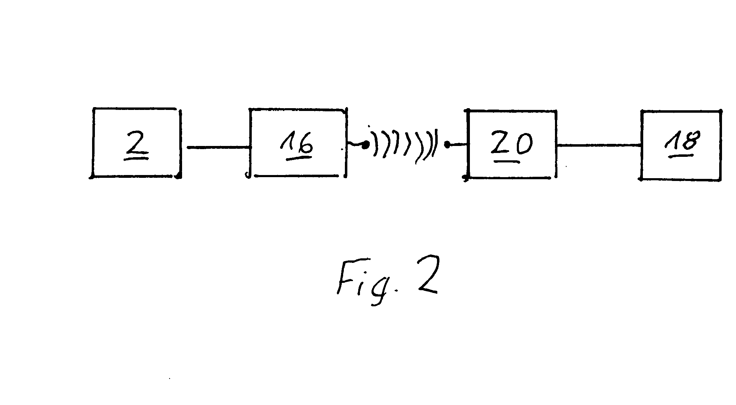

FIG. 2 zeigt ein schematisches Blockschaltbild zur Verdeutlichung der Einbindung des Sensormodules 2 in ein System zur Überwachung und/oder Steuerung des Bestandes an Bauteilen in einer Serienfertigung.

Dem Sensormodul 2 ist ein Funksender 16 zugeordnet, mit dem das Sensormodul 2 in Signalübertragungsverbindung steht. Der Funksender 16 sendet bei Betrieb per Funk die abgefühlte Gewichtskraft des Kleinladungsträgers 4 repräsentierendes Signal zu einer zentralen Steuerungseinrichtung 18, die zum Empfang dieses Signales einen Funkempfänger 20 aufweist.

Bei dem dargestellten Ausführungsbeispiel ist der Funksender 16 derart ausgebildet und eingerichtet, dass ein die Gewichtskraft des Kleinladungsträgers 4 repräsentierendes Signal zu der zentralen Steuerungseinrichtung 18 übertragen wird, wenn die Gewichtskraft des Kleinladungsträgers 4 einen vorbestimmten Wert erreicht oder unterschreitet.

Darüber hinaus ist der Funksender 16 derart ausgebildet und eingerichtet, dass in vorbestimmten zeitlichen Abständen eine Signalübertragung zu der zentralen Steuerungseinrichtung 18 stattfindet. Auf diese Weise kann an der zentralen Steuerungseinrichtung 18 festgestellt werden, dass sich das Sensormodul in funktionsfähigem Zustand befindet. Bei dem dargestellten Ausführungsbeispiel ist das Sensormodul 2 einschließlich Funksender 16 batteriebetrieben, wobei bei der Signalübertragung zu der zentralen Steuerungseinrichtung 18 Daten übertragen werden können, die den Ladezustand der Batterie repräsentieren.

Bei Betrieb des Sensormodules liegt der Kleinladungsträger 4 an der Platte 14 an, so dass seine Gewichtskraft auf die Wägezelle 10 übertragen wird, die ein elastisch verformbares Bauteil enthält, das sich entsprechend der Gewichtskraft des Kleinladungsträgers 4 mehr oder weniger verformt. Die elastische Verformung dieses Bauteiles wird in von Wägezellen bekannter Weise in ein elektrisches Signal umgewandelt, das die Gewichtskraft des Kleinladungsträgers 4 nebst darin aufgenommenen Bauteilen repräsentiert. Im Übrigen sind der Aufbau und das Funktionsprinzip einer Wägezelle dem Fachmann allgemein bekannt und werden daher hier nicht näher erläutert.

Während des Betriebs entnehmen Werker nach und nach Bauteile aus dem Kleinladungsträger 4, so dass sich sein Füllzustand entsprechend den entnommenen Bauteilen verringert. Dies führt zu einer Verringerung der Gewichtskraft des Kleinladungsträgers 4, die über die Wägezelle 10 abgefühlt und zu der zentralen Steuerungseinrichtung 18 übertragen wird. Da das Leergewicht des Kleinladungsträgers 4 bekannt ist, steht auf diese Weise an der zentralen Steuerungseinrichtung 18 eine Information darüber zur Verfügung, wieviele Bauteile sich noch in dem Kleinladungsträger 4 befinden.

Da erfindungsgemäß durch Ermittlung der Gewichtskraft des Kleinladungsträgers 4 oder eines anderen Ladungsträgers sehr präzise ermittelt werden kann, wieviele Bauteile sich noch in oder an einem Ladungsträger befinden, kann der Materialnachschub bei Verwendung des erfindungsgemäßen Sensormodules 2 bedarfsgerechter gestaltet werden, indem Bauteile bei Bedarf beispielsweise "just-in-time" angeliefert werden können.

Falls hinter dem Kleinladungsträger 4 auf der Ablaufbahn weitere Kleinladungsträger mit Bauteilen stehen, so geht deren Gewichtskraft in die durch die Wägezelle 10 ermittelte Gewichtskraft ein. Da das Leergewicht der Kleinladungsträger 4 bekannt ist, kann an der zentralen Steuerungseinrichtung 18 ermittelt werden, wieviele Kleinladungsträger 4 sich noch auf der Ablaufbahn befinden. Bei Bedarf kann die Anzahl der auf der Ablaufbahn angeordneten Kleinladungsträger auch durch entsprechende geeignete Sensoriken ermittelt werden. Ist bekannt, wieviele Kleinladungsträger 4 sich auf der Ablaufbahn befinden, so kann an der zentralen Steuerungseinrichtung 18 anhand des Leergewichtes der Kleinladungsträger 4 und des Gewichtes der Bauteile ermittelt werden, wie viele Bauteile noch auf der Ablaufbahn zur Verfügung stehen. Unter der Annahme, dass auf der Ablaufbahn hinter dem Kleinladungsträger 4 angeordnete weitere Kleinladungsträger vollständig mit Bauteilen gefüllt sind und das Gewicht dieser gefüllten Kleinladungsträger bekannt ist, kann präzise ermittelt werden, wieviele Bauteile sich noch in dem auf der Ablaufbahn vorne befindlichen Kleinladungsträger 4 befinden.

Das erfindungsgemäße Sensormodul 2 ist zum Abfühlen des Vorhandenseins und/oder der Gewichtskraft beliebiger Ladungsträger geeignet, unabhängig davon, ob es sich um Kleinladungsträger oder Großladungsträger handelt. Die Empfindlichkeit des Kraftaufnehmers, bei dem dargestellten Ausführungsbeispiel der Wägezelle 10, wird entsprechend dem jeweiligen Anwendungsfall gewählt.

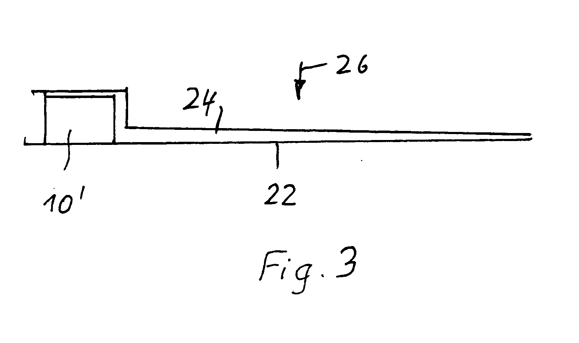

In FIG. 3 ist stark schematisch ein zweites Ausführungsbeispiel eines erfindungsgemäßen Sensormodules 2 dargestellt, das zum Abfühlen der Gewichtskraft eines Großladungsträgers dient. Bei dem dargestellten Ausführungsbeispiel ist eine in ihrer Empfindlichkeit an einen Großladungsträger angepasste Wägezelle 10' vorgesehen, die auf einer Grundplatte 22 montiert ist. Zur Kraftübertragung von einem Ladungsträger auf die Wägezelle 10' ist eine winkelartig ausgebildete Übertragungsplatte 24 vorgesehen. Steht ein Ladungsträger auf der Übertragungsplatte 24 auf, so wirkt seine Gewichtskraft, wie in FIG. 3 durch einen Pfeil 26 symbolisiert, auf die Übertragungsplatte 24 und wird von dieser auf die Wägezelle 10' übertragen, so dass auf diese Weise die Gewichtskraft des Ladungsträgers ermittelt werden kann. Damit kann in zu dem ersten Ausführungsbeispiel analoger Weise unter Heranziehung des Leergewichtes des Ladungsträgers und des Gewichtes der einzelnen Bauteile, die an dem Ladungsträger aufgenommen worden sind, ermittelt werden, wie viele Bauteile sich noch an dem Ladungsträger befinden.

Besonders vorteilhaft ist das erfindungsgemäße Sensormodul dann einsetzbar, wenn sich an einem Ladungsträger in oder an einem Ladungsträger gleichartige Bauteile befinden. Das erfindungsgemäße Sensormodul kann grundsätzlich jedoch auch dann verwendet werden, wenn sich in oder an einem Ladungsträger unterschiedliche Bauteile befinden. In diesem Falle wird die Auswertung in der zentralen Steuerungseinrichtung 18 an die veränderten Gegebenheiten angepasst.

Hardware für die Weiterverarbeitung des von der Wägezelle 10 bereitgestellten Ausgangssignales kann mit dem Funksender 16 zu einer Baueinheit integriert werden. Die entsprechende Hardware kann jedoch auch in einem separaten Gehäuse aufgenommen oder mit dem Sensormodul 2 zu einer Baueinheit integriert werden. Es ist auch möglich, das Sensormodul 2 zusammen mit der entsprechenden Hardware und dem Funksender 16 zu einer Baueinheit zu integrieren.

Die Erfindung stellt ein Sensormodul bereit, das auf einfache und kostengünstigem Wege eine präzise Überwachung und/oder Steuerung des Bestandes an Bauteilen in einer Serienfertigung ermöglicht.

## Patentansprüche

1. Sensormodul (2) zur Verwendung in einem System zur Überwachung und/oder Steuerung des Bestandes an Bauteilen in einer Serienfertigung,
mit wenigstens einem Kraftaufnehmer zum Abfühlen des Vorhandenseins und/oder der Gewichtskraft eines Ladungsträgers,
wobei der Kraftsensor in Datenübertragungsverbindung mit einem Funksender (16) steht zur Übermittlung eines die abgefühlte Gewichtskraft des Ladungsträgers repräsentierenden Signales zu einer zentralen Steuerungseinrichtung (18).

2. Sensormodul nach Anspruch 1, **dadurch gekennzeichnet, dass** das Sensormodul (2) einschließlich Funksender (16) batteriebetrieben ist.

3. Sensormodul nach Anspruch 1 oder 2, **dadurch gekennzeichnet, dass** der Funksender (16) derart ausgebildet und eingerichtet ist, dass in vorbestimmten zeitlichen Abständen eine Signalübertragung zu der zentralen Steuerungseinrichtung (18) stattfindet.

4. Sensormodul nach einem der vorhergehenden Ansprüche, **dadurch gekennzeichnet, dass** der Funksender (16) derart ausgebildet und eingerichtet ist, dass ein die Gewichtskraft des Ladungsträgers repräsentierendes Signal zu der zentralen Steuerungseinrichtung (18) übertragen wird, wenn die Gewichtskraft des Ladungsträgers einen vorbestimmten Wert erreicht oder unterschreitet.

5. Sensormodul nach einem der vorhergehenden Ansprüche, **dadurch gekennzeichnet, dass** dem Kraftaufnehmer eine Überlastsicherung zugeordnet ist.

6. Sensormodul nach Anspruch 5, **dadurch gekennzeichnet, dass** die Überlastsicherung als passive Überlastsicherung ausgebildet ist.

7. Sensormodul nach einem der vorhergehenden Ansprüche, **dadurch gekennzeichnet, dass** wenigstens ein Kraftaufnehmer als Wägezelle (10) ausgebildet ist.

8. Sensormodul nach einem der vorhergehenden Ansprüche, **dadurch gekennzeichnet, dass** dem Sensormodul (2) eine schiefe Ebene zugeordnet ist, die eine Ablaufbahn für Ladungsträger, insbesondere Kleinladungsträger (4), definiert, wobei der Kraftaufnehmer oder ein mit dem Kraftaufnehmer in Kraftübertragungsverbindung stehendes Bauteil in die Ablaufbahn hineinragt.

9. System zur teil- oder vollautomatischen Steuerung des Nachschubs an Bauteilen in eine Serienfertigung,
**dadurch gekennzeichnet,**
**dass** das System wenigstens ein Sensormodul (2) nach einem der vorhergehenden Ansprüche aufweist.

10. Verwendung eines Sensormodules nach einem der Ansprüche 1 bis 8 zum Abfühlen des Vorhandenseins und/oder der Gewichtskraft eines Ladungsträgers in einem System zur teil- oder vollautomatischen Steuerung des Nachschubs an Bauteilen in eine Serienfertigung.
